# EUROPEAN PATENT APPLICATION

(11) **EP 4 776 406 A1**
(43) Date of publication of application: **15.07.2026**
(21) Application number: 25867303.7
(22) Date of filing: 13.10.2025
(51) Int. Cl.: H01M 50/242, H01M 50/107, H01M 50/152, H01M 50/186, B60L 50/64, H01M 50/14, H01M 50/249

(54) **BATTERY CELL AND BATTERY PACK**

(30) Priority: 16.10.2024 KR 20240140861; 16.10.2024 KR 20240140994
(71) Applicant: LG Energy Solution, Ltd., Seoul 07335 (KR)
(72) Inventor: PARK, Geungyung, Daejeon 34122 (KR); KIM, Minwook, Daejeon 34122 (KR)
(74) Representative: Goddar, Heinz J.
(86) International application number: PCT/KR2025/016056
(87) International publication number: WO 2026/084399

(57) **Abstract**

A battery cell according to one embodiment of the present invention comprises: an electrode assembly; a battery case for accommodating the electrode assembly; and a cap assembly disposed on an upper portion of the battery case and comprising a top cap; wherein the top cap comprises a return portion that is bent from an edge of the top cap and extends toward the center of the top cap.

The battery cell and battery pack according to the present invention have the effect of enhanced impact resistance against external impact (crush).

## Description

### [TECHNICAL FIELD]

The present invention relates to a battery cell and a battery pack, and more particularly, to a battery cell and a battery pack having enhanced impact resistance against crush in a cylindrical battery cell.

### [BACKGROUND ART]

Unlike non-rechargeable primary batteries, secondary batteries are batteries that can be charged and discharged, and they are applied not only to portable devices but also to vehicles driven by an electric drive source, such as electric vehicles (EVs) and hybrid electric vehicles (HEVs).

Types of secondary batteries currently in widespread use include lithium-ion batteries, lithium-polymer batteries, nickel-cadmium batteries, nickel-metal hydride batteries, and nickel-zinc batteries. The operating voltage of such a unit secondary battery cell, that is, a unit battery cell, is about 2.5 V to 4.6 V. Therefore, when a higher output voltage is required, a battery pack is formed by connecting a plurality of battery cells in series. In addition, depending on the charge/discharge capacity required for the battery pack, a plurality of battery cells may be connected in parallel to configure the battery pack. Accordingly, the number of battery cells included in the battery pack may be variously determined depending on the required output voltage or charge/discharge capacity.

When a plurality of battery cells are connected in series and/or in parallel to form a battery pack, it is common to first configure a battery module consisting of at least onel, preferably a plurality of battery cells, and then to use at least one such battery module together with additional components to configure the battery pack. Here, a battery module is a unit composed of multiple battery cells connected in series or parallel, while a battery pack consists of multiple battery modules interconnected in series or parallel to enhance the overall capacity and output.

The battery cells are classified into pouch-type, cylindrical, or prismatic types according to the external shape of the battery case.

Among these, cylindrical cells are primarily housed in a metal case having a cylindrical structure, thereby exhibiting excellent safety, and are advantageous in that they can realize high energy density by accommodating a jelly-roll-type electrode assembly therein, while also facilitating the configuration of a large-capacity power storage device by connecting multiple cells in series or in parallel.

The electrode assembly housed in the cylindrical case is a rechargeable power-generation element having a stacked structure of a positive electrode, a separator, and a negative electrode, and is classified into a jelly-roll type, a stack type, and a stack/folding type. In the jelly-roll type, a separator is interposed between elongated sheet-shaped positive and negative electrodes coated with active material, and the assembly is wound; the stack type is a form in which a plurality of positive and negative electrodes of a predetermined size are sequentially stacked with a separator interposed; and the stack/folding type is a hybrid structure of the jelly-roll type and the stack type. Among them, the jelly roll-type electrode assembly has the advantages of being easy to manufacture and having a high energy density per weight.

The jelly-roll electrode assembly is a wound form with a separator interposed between a positive electrode and a negative electrode each coated with an active material; a positive-electrode tab protruding to the upper side of the electrode assembly is disposed on the positive electrode, and a negative-electrode tab protruding to the lower side of the electrode assembly may be disposed on the negative electrode.

The crush test of a cylindrical battery cell is an evaluation method that applies a constant force to the cell while it is lying horizontally, and the pass condition is that no ignition occurs. However, during the process of compressing the cell, the can may not withstand the external force and become crushed, causing structural deformation of the jelly roll electrode assembly, which can result in a short circuit.

### [SUMMARY OF THE INVENTION]

### [TECHNICAL PROBLEM]

The present invention is intended to solve the problems described above, and an object thereof is to provide a battery cell and battery pack with enhanced impact resistance against external impact.

### [SOLUTION TO THE PROBLEM]

A battery cell according to one embodiment of the present invention comprises: an electrode assembly; a battery case for accommodating the electrode assembly; and a cap assembly disposed on an upper portion of the battery case and comprising a top cap; wherein the top cap comprises a return portion that is bent from an edge of the top cap and extends toward the center of the top cap.

Additionally, the return portion of the top cap is formed along the circumferential direction of the top cap.

Additionally, the return portion is formed integrally with the top cap.

Additionally, the cap assembly further includes a cap plate disposed on the lower side of the top cap.

Additionally, the end of the cap plate can wrap around the return portion from the outside.

Additionally, the cap assembly further includes a gasket between the cap plate and the battery case.

Additionally, the battery case portion surrounding the electrode assembly is formed of a double-wall structure composed of an outer wall and an inner wall disposed inside the outer wall.

Additionally, the inner wall is formed by multiple arch pillars interconnected with each other.

Additionally, a plurality of said arch pillars are arranged along the circumferential direction of the electrode assembly.

Additionally, the arch pillar includes a concave portion that is concave toward the outside of the battery cell.

Additionally, the battery cell of the present embodiment further includes a filler material filled between the inner wall and the outer wall.

Additionally, the filler may be a foam material.

Additionally, the filler may be rubber.

The battery cell may include a plurality of elastic spheres surrounding the electrode assembly on the inner side of the battery case

A plurality of the above elastic spheres can be stacked in a vertical direction.

The above elastic sphere can be restored by elasticity.

The electrode assembly can be in contact with the inside of the elastic sphere, and the battery case can be in contact with the outside of the elastic sphere.

The above elastic sphere may be made of rubber.

The above elastic sphere may be made of foam material.

The above battery cell may be a cylindrical battery cell.

The battery pack of the present invention includes a plurality of battery cells.

### [EFFECTS OF THE INVENTION]

The battery cell and battery pack according to the present invention have the effect of enhancing impact resistance against external impact (crush).

### [BRIEF DESCRIPTION OF DRAWINGS]

FIG. 1 is a drawing illustrating a cylindrical battery cell in one embodiment of the present invention.
FIG. 2 is a drawing for explaining the structure of a cylindrical battery cell in one embodiment of the present invention.
FIG. 3 is a drawing illustrating an electrode assembly in one embodiment of the present invention.
FIG. 4 is a drawing illustrating the appearance of an electrode assembly before being wound in one embodiment of the present invention.
FIG. 5 is a drawing for explaining a wound form of an electrode assembly in one embodiment of the present invention.
FIG. 6 is a longitudinal cross- sectional view of a cylindrical battery cell in the first embodiment of the present invention.
FIG. 7 is a detailed view of the part indicated by a circle in FIG. 6.
FIG. 8 is a cross-sectional view along line B-B' in FIG. 6.
FIG. 9 is a partial detailed view of FIG. 8.
FIG. 10 is a drawing showing an external force being applied to a cylindrical battery cell in the first embodiment of the present invention.
FIG. 11 is a longitudinal cross-sectional view of a cylindrical battery cell in the second embodiment of the present invention.
FIG. 12 is a cross-sectional view taken along line B-B' in FIG. 11.
FIG. 13 is a partial detailed view of FIG. 12.
FIG. 14 is a drawing showing an external force being applied to a cylindrical battery cell in the second embodiment of the present invention.
FIG. 15 is a view illustrating a battery pack according to one embodiment of the present invention.
FIG. 16 is a drawing illustrating a electric vehicle equipped with the battery pack according to one embodiment of the present invention.

### [DETAILED DESCRIPTION OF THE INVENTION]

The advantages and features of the present invention, and the methods of achieving them, will become apparent with reference to the embodiments described in detail below in conjunction with the accompanying drawings. However, the present invention is not limited to the embodiments disclosed below but may be implemented in various other forms; the embodiments are provided merely to ensure a complete disclosure of the present invention and to fully inform those skilled in the art of the scope of the invention. The present invention is defined only by the scope of the claims. Therefore, in some embodiments, well-known process steps, well-known device structures, and well-known technologies are not described in detail so as not to obscure the present invention. Throughout the specification, the same reference numerals refer to the same elements.

In the drawings, the thicknesses of layers and regions may be exaggerated for clarity. Throughout the specification, similar parts are designated by the same reference numerals. When an element such as a layer, film, region, or plate is referred to as being "on" another element, it can be directly on the other element or intervening elements may be present. Conversely, when a part is referred to as being "directly on" another part, it is to be understood that there are no intervening parts. Also, when an element is referred to as being "under" another element, it may be disposed directly beneath the other element or with one or more intervening elements therebetween. Conversely, when a part is referred to as being "directly under" another part, it means that there are no intervening parts.

A battery cell according to an embodiment of the present invention and the battery pack including the same are described in detail with reference to the drawings.

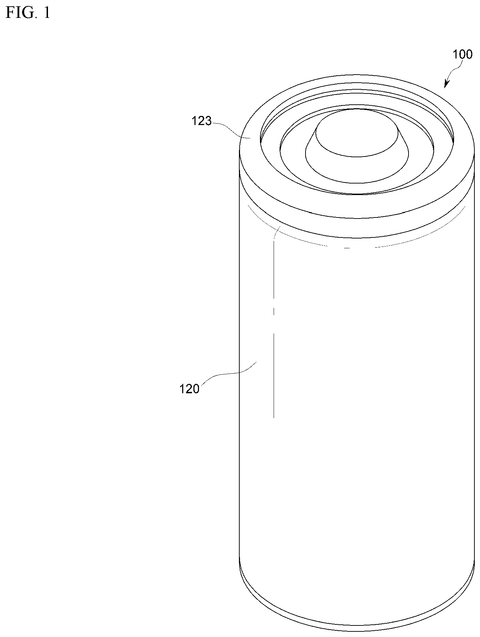

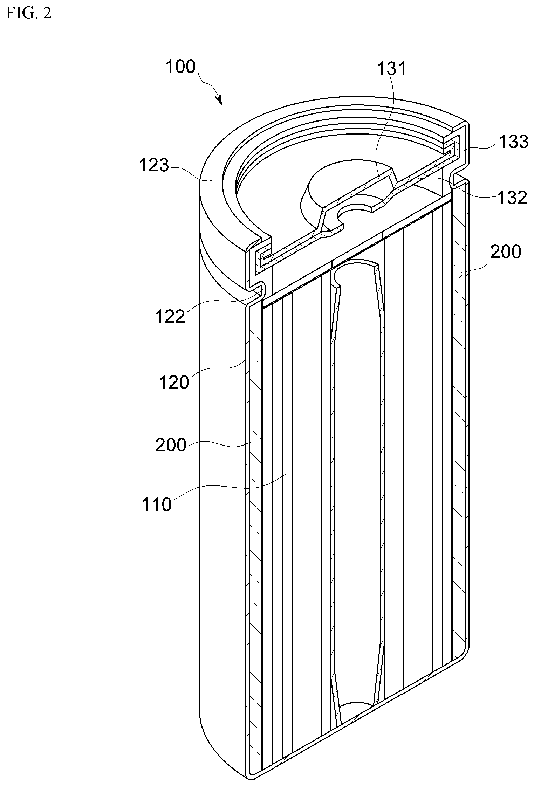

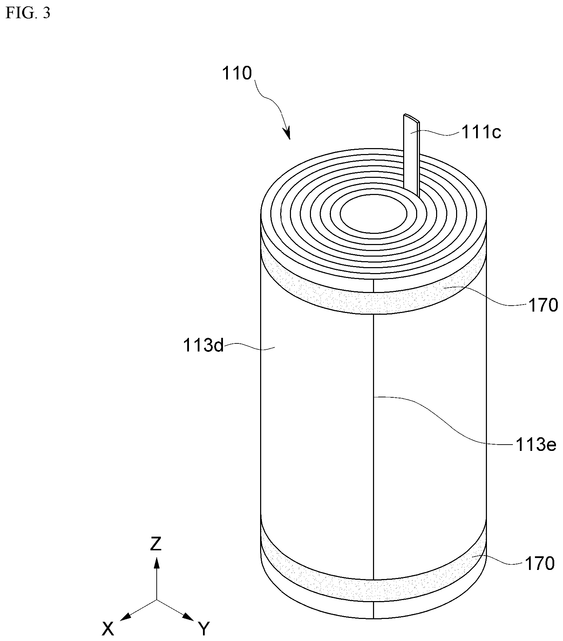

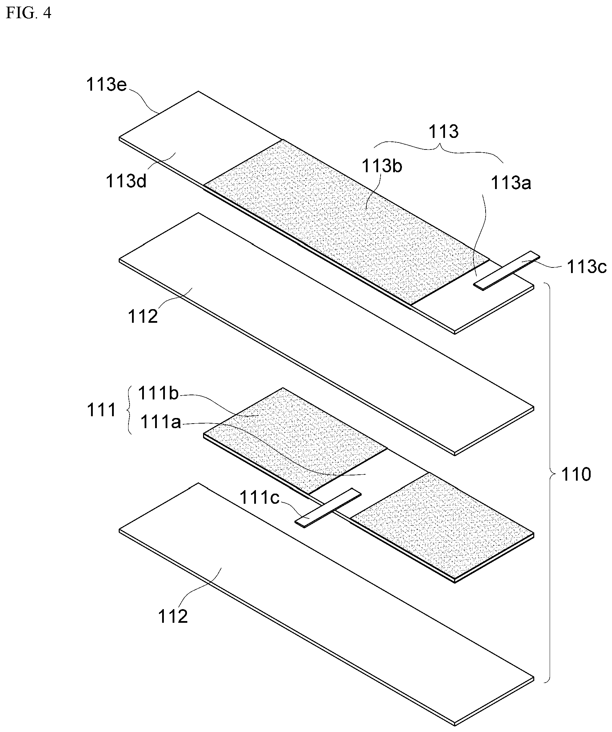

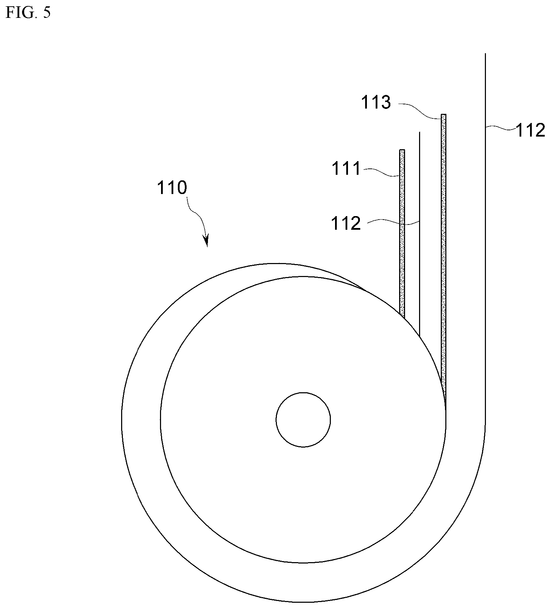

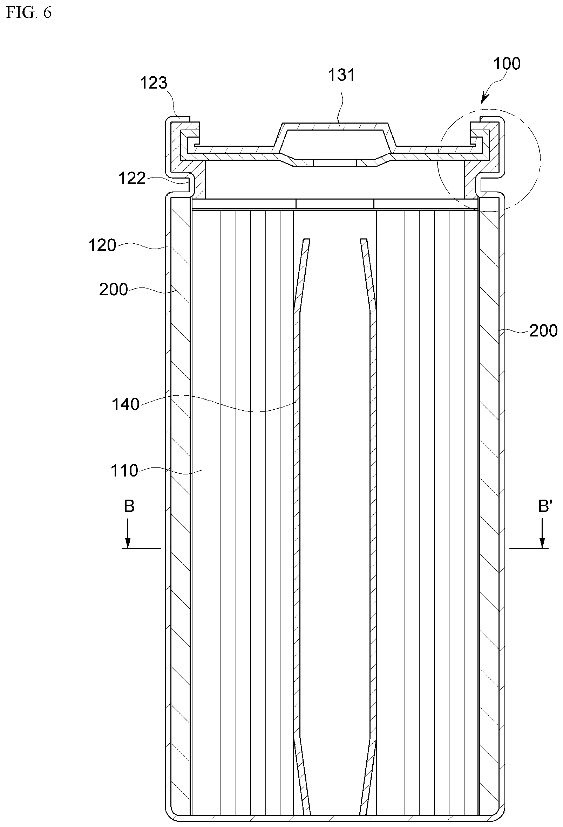

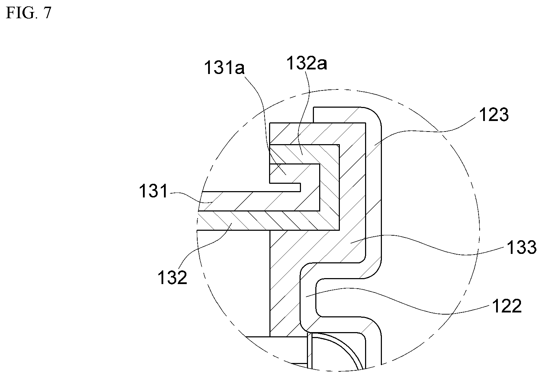

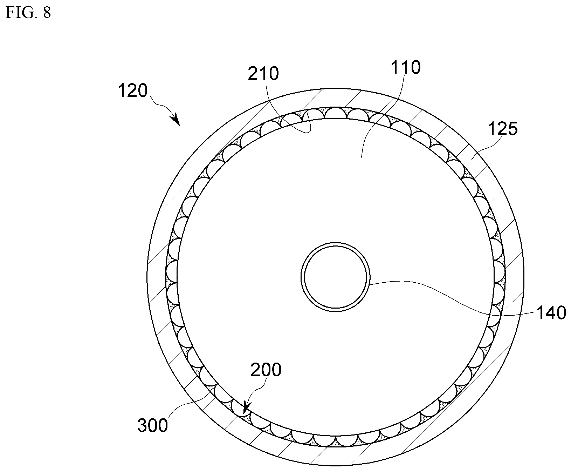

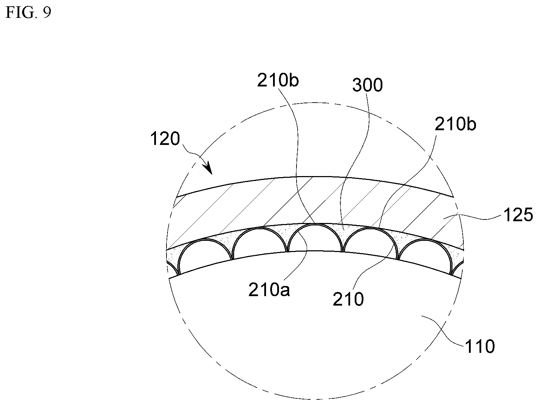

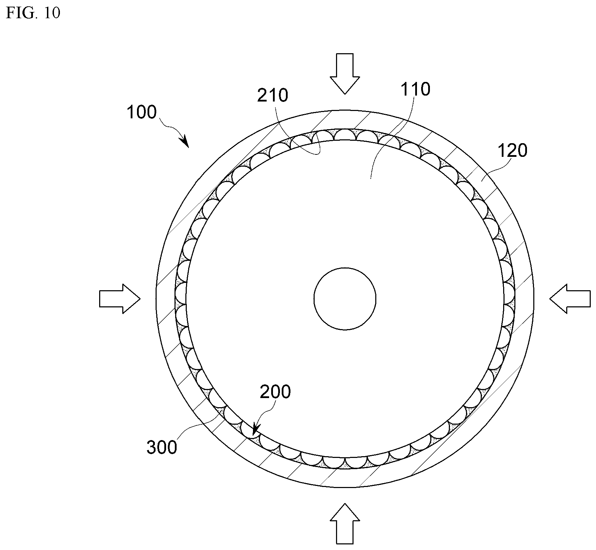

FIG. 1 is a drawing showing a cylindrical battery cell in one embodiment of the present invention, FIG. 2 is a drawing for explaining the structure of the cylindrical battery cell in one embodiment of the present invention, FIG. 3 is a drawing showing an electrode assembly in one embodiment of the present invention, FIG. 4 is a drawing showing an electrode assembly before being wound in one embodiment of the present invention, FIG. 5 is a drawing for explaining a wound form of the electrode assembly in one embodiment of the present invention, FIG. 6 is a longitudinal cross-sectional view of a cylindrical battery cell in a first embodiment of the present invention, FIG. 7 is a detailed view of a portion indicated by a circle in FIG. 6, FIG. 8 is a cross-sectional view along line B-B' in FIG. 6, FIG. 9 is a partial detailed view of FIG. 8, and FIG. 10 is a drawing showing an external force being applied to a cylindrical battery cell in the first embodiment of the present invention.

In the first embodiment of the present invention, a battery cell 100 is described with reference to FIGS. 1 to 10.

The battery cell 100 may be a cylindrical battery cell 100 in which the electrode assembly 110 is built into a cylindrical can.

A cylindrical battery cell 100 may include a jelly roll-shaped electrode assembly 110 and a battery case 120 for accommodating the electrode assembly 110. An upper insulating member 150 may be disposed on the upper side of the electrode assembly 110, and a lower insulating member 160 may be disposed on the lower side of the electrode assembly 110.

The electrode assembly 110 has a jelly roll-shaped structure in which a first electrode 111, a second electrode 113, and a separator 112 are interposed and wound, and a center pin 140 can be inserted into its center.

A cylindrical battery cell 100 can be formed by housing an electrode assembly 110 in a battery case 120, injecting an electrolyte into the battery case 120, and then joining a cap assembly 130 to the top of the battery case 120. The battery case 120 may be a cylindrical can, and a jelly roll-shaped electrode assembly 110 may be housed in the cylindrical battery case 120 to implement a cylindrical secondary battery.

The battery case 120 may include a beading portion 122 and a crimping portion 123.

The beading portion 122 is for stable coupling of the cap assembly 130, can be formed along the circumferential direction on the upper outer surface of the battery case 120, and may be recessed toward the center of the electrode assembly 110. The beading portion 122 can prevent movement of the electrode assembly 110.

The crimping portion 123 may be disposed above the beading portion 122 and formed to wrap around the edge portion of the cap assembly 130 along the circumferential direction. The crimping portion 123 can ensure stable coupling of the cap assembly 130.

The cap assembly 130 may include a top cap 131 forming an electrode terminal, a cap plate 132, and a gasket 133 for maintaining airtightness.

The top cap 131 can form a positive terminal.

The gasket 133 may be mounted on the upper inner surfaces of the crimping portion 123 and the beading portion 122 to increase the sealing force between the cap assembly 130 and the battery case 120.

The second electrode tab 111c may extend upward from the electrode assembly 110. Specifically, it can extend from the second electrode 111 of the electrode assembly 110. The second electrode tab 111c may be a positive electrode tab.

The second electrode tab 111c is connected to the cap plate 132, so that the top cap 131 can function as an electrode terminal (positive terminal). An opening 151 is formed in the upper insulating member 150, and the second electrode tab 111c can be connected to the cap plate 132 through the opening 151.

The center pin 140 generally includes a metal material to impart a certain strength and is formed of a cylindrical structure made by bending a plate into a round shape. In addition to self-heating, the center pin 140 can function as a passage for fixing and supporting the electrode assembly 110 and releasing gas generated by internal reactions during charging, discharging, and operation.

The electrolyte injected into the battery case 120 may be a non-aqueous electrolyte containing a lithium salt, and the non-aqueous electrolyte containing a lithium salt is composed of a non-aqueous electrolyte and a lithium salt. Non-aqueous electrolytes include, but are not limited to, non-aqueous organic solvents, organic solid electrolytes, and inorganic solid electrolytes.

The battery cell 100 does not necessarily have to be provided as a cylindrical battery cell 100, and may be provided as a battery cell of another shape, such as a prismatic battery cell.

FIG. 4 is a drawing showing the appearance of the electrode assembly 110 before being wound. The electrode assembly 110 can be formed in the form of a jelly roll by winding together a first electrode 113, a second electrode 111, and a separator 112 in the shape of a long sheet. A separator 112 can be interposed between the first electrode 113 and the second electrode 111. Additionally, to prevent the first electrode 113 and the second electrode 111 from contacting when rolled into a jelly roll shape, a separator 112 may be additionally placed under the second electrode 111.

The first electrode 113 may include a first electrode current collector 113a and a first active material layer 113b on the first electrode current collector 113a. The first active material layer 113b can be formed by applying an electrode active material to one or both sides of the first electrode current collector 113a. Additionally, a first electrode tab 113c may be attached to an area of the first electrode current collector 113a where the electrode active material is not applied.

As an example, as shown, no electrode active material may be applied to the core-side end of the first electrode current collector 113a, and the first electrode tab 113c may be attached in this area. The first electrode 113 may be a negative electrode, and the first electrode tab 113c may be a negative-electrode tab.

An exposed portion 113d, on which the electrode active material is not applied, may also be disposed in an area of the first electrode current collector 113a located at the outer periphery of the electrode assembly 110. The exposed portion 113d may be a negative-electrode uncoated portion.

The second electrode 111 may include a second electrode current collector 111a and a second active material layer 111b on the second electrode current collector 111a. The second active material layer 111b can be formed by applying an electrode active material to one or both sides of the second electrode current collector 111a. Additionally, a second electrode tab 111c may be attached to an area of the second electrode current collector 111a where the electrode active material is not applied. As an example, as illustrated, a second electrode tab 111c may be attached at the center of the second electrode current collector 111a, and on the second electrode current collector 111a, a second active material layer 111b may be arranged on both sides of the second electrode tab 111c. The second electrode 111 may be a positive electrode, and the second electrode tab 111c may be a positive electrode tab.

A sealing tape 170 may be disposed on the outer circumferential surface of the electrode assembly 110. In one embodiment of the present invention, the sealing tape 170 can be placed on the upper and lower portions of the outer circumferential surface of the electrode assembly 110 as shown in FIG. 4. That is, the sealing tape 170 can be arranged along the circumferential direction on the outer surface of the jelly roll-shaped electrode assembly 110, and can be attached to the outer surface of the electrode assembly 110 by an adhesive layer on the lower surface of the sealing tape 170.

The sealing tape 170 may be attached to the outer circumferential surface of the first electrode 113 (negative electrode) disposed at the outer periphery of the electrode assembly 110. And, the sealing tape 170 may be placed across the end 113e of the first electrode 113

The sealing tape 170 may be disposed on the exposed portion 113d of the first electrode 113 (negative electrode) disposed at the outer periphery of the electrode assembly 110.

A sealing tape 170 may be placed on the outer surface of the electrode assembly 110 to prevent the jelly roll-shaped electrode assembly 110 from coming loose.

In this embodiment, as shown in FIGS. 6 and 7, the top cap 131 in the cap assembly 130 includes a return portion 131a at the edge. The top cap 131 may be approximately circular.

The return portion 131a may be bent from the edge of the top cap 131 and may extend toward the center of the top cap 131. The return portion 131a can be formed by bending in a '⊏' shape at the edge of the top cap 131, and can be formed along the circumferential direction at the edge of the top cap 131. The return portion 131a of the top cap 131 can be formed integrally with the top cap 131.

When the edge of the top cap 131 is formed in a straight shape, there is a problem in that when an external force is applied to the battery cell 100 or the top cap 131, the edge of the top cap 131 penetrates the cap plate 132 and/or the gasket 133 and comes into contact with the outer wall of the can, which is the battery case 120, causing a short circuit.

However, in this embodiment, since the return portion 131a is arranged at the edge of the top cap 131 in this way, even when an external force is applied to the battery cell 100 or the top cap 131, the edge of the top cap does not penetrate the cap plate 132 and/or gasket 133, so that a short circuit does not occur.

The end of the cap plate 132 placed on the lower side of the upper cap 131 can wrap around the return portion 131a from the outside. The cap plate 132 may be approximately circular.

The edge of the cap plate 132 can be formed to extend along the return portion 131a from the outside of the return portion 131a. That is, the end 132a of the cap plate 132 may be bent at the edge of the cap plate 132 and may extend toward the center of the cap plate 132 while wrapping around the return portion 131a, and may be formed along the circumferential direction at the edge of the cap plate 132.

A gasket 133 for maintaining airtightness can be placed between the cap plate 132 and the battery case 120 (crimping portion 123) on the outside of the cap plate 132.

In this embodiment, as shown in FIG. 8, an inner wall 200 may be placed inside a cylindrical can-shaped battery case 120. The inner wall 200 can be arranged along the circumferential direction of the electrode assembly 110 and can surround the electrode assembly 110. The inner wall 200 can be placed on the inner side of the battery case 120 portion surrounding the electrode assembly 110. Accordingly, the battery case 120 portion surrounding the electrode assembly 110 may be configured as a double-wall structure consisting of an outer wall 125 and an inner wall 200.

The inner wall 200 may include a plurality of arch columns 210 In this embodiment, the inner wall 200 may be formed by arranging a plurality of arch pillars 210 along the circumference of the electrode assembly 110. Additionally, the inner wall 200 may be formed by arranging a plurality of arch pillars 210 along the inner circumferential surface of the outer wall 125.

The inner wall 200 can be formed by connecting a plurality of arch pillars 210 to each other.

Each arch pillar 210 can extend vertically, and the lower part of each arch pillar 210 can be placed on the bottom of the battery case 120.

It may include a concave portion 210a formed concavely on the outside of the battery cell 100. The concave portion 210a may have an arc or semicircle shape. Both ends of the arch pillar 210 can be connected to one end of an adjacent arch pillar 210, and can be bent at one end of the arch pillar 210 and connected to one end of the adjacent arch pillar 210. As shown in FIG. 9, the lowest point 210b located in the middle of the concave portion 210a can be positioned to be in contact with the outer wall 125.

Accordingly, the inner wall 200 can be formed by repeatedly bending a single plate concavely outward along the circumferential direction of the electrode assembly 110, and a plurality of arch pillars 210 can be formed integrally. The material of the inner wall 200 may be metal, for example, stainless steel (SUS).

In this embodiment, the battery case 120 portion surrounding the electrode assembly 110 is formed as a double-wall structure of an inner wall 200 and an outer wall 125 in which arch pillars 210 are continuously connected and arranged, so that when an external force is applied to the battery cell 100, as shown in FIG. 10, the impact resistance such as crush is strengthened, and the electrode assembly 110 is protected from the external force.

In this embodiment, the space between the inner wall 200 and the outer wall 125 can be filled with a filler material 300.

The filler material 300 may be, for example, a foam material. The foam material can be a urethane foam, a synthetic resin foam, or an expanded foam.

Additionally, the filler material 300 may be an elastic member such as rubber, or may be silicone or synthetic resin.

In this way, in this embodiment, the space between the inner wall 200 and the outer wall 125 is filled with a filler material 300, so that when an external force such as a crush is applied, the external force or impact received by the wall of the battery case 120 can be alleviated.

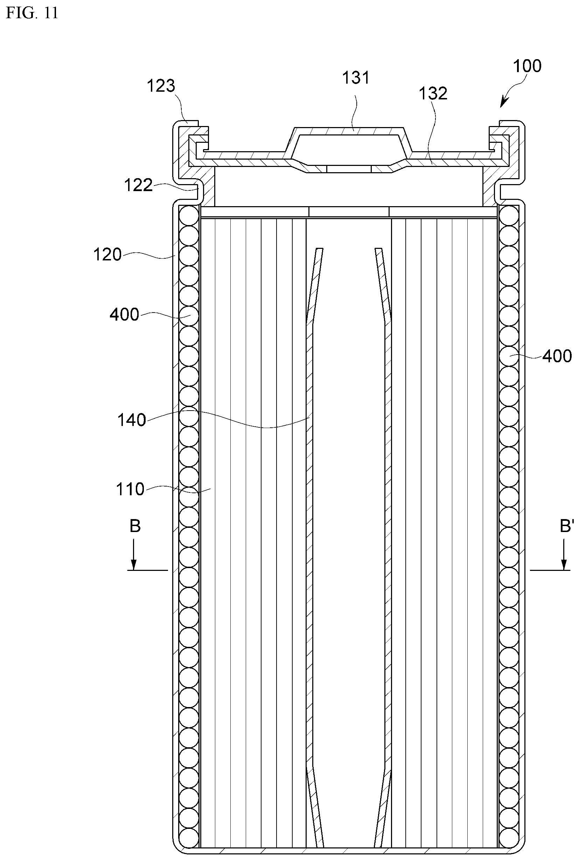

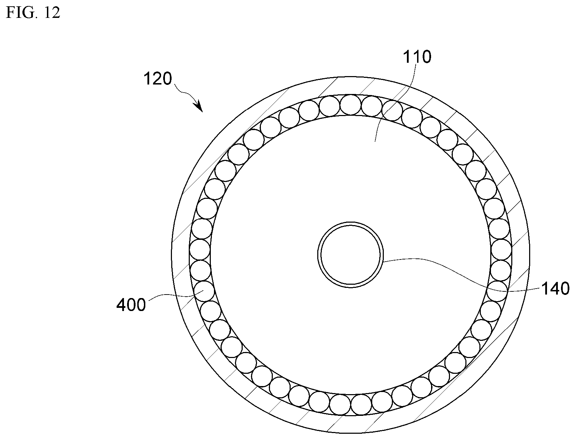

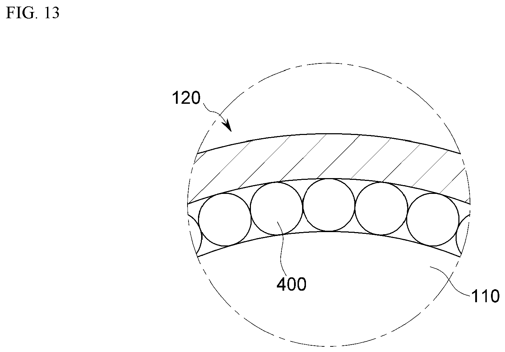

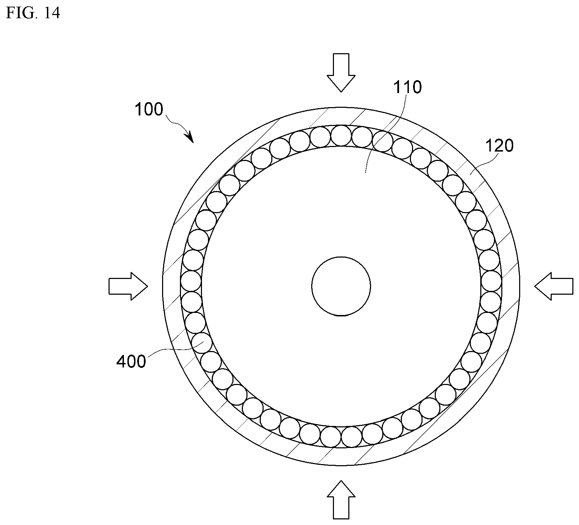

Next, a battery cell 100 according to a second embodiment of the present invention will be described. FIG. 11 is a longitudinal cross-sectional view of a cylindrical battery cell in a second embodiment of the present invention, FIG. 12 is a cross-sectional view taken along line B-B' in FIG. 11, FIG. 13 is a partial detailed view of FIG. 12, and FIG. 14 is a drawing showing an external force being applied to a cylindrical battery cell in a second embodiment of the present invention.

What makes the second embodiment different from the first embodiment described above is that a buffer portion is placed instead of the inner wall 200 in the first embodiment described above.

In this embodiment, as shown in FIG. 11, a buffer portion may be placed inside a cylindrical can-shaped battery case 120. The buffer portion may include a plurality of elastic spheres 400. A plurality of elastic spheres 400 can be arranged along the circumferential direction of the electrode assembly 110 and can surround the electrode assembly 110. A buffer portion composed of a plurality of elastic spheres 400 can be placed on the inner side of the side wall of the battery case 120 surrounding the electrode assembly 110.

The elastic sphere 400 may have elasticity and may be elastically restorable. In this embodiment, a plurality of elastic spheres 400 may be arranged along the circumferential direction of the electrode assembly 110. Additionally, as illustrated in FIG. 11, a plurality of elastic spheres 400 can be arranged to be vertically stacked from the bottom to the top of the electrode assembly 110 on the outer periphery of the electrode assembly 110.

The elastic sphere 400 can be formed in a roughly spherical shape. The material of the elastic sphere 400 may be made of an elastic body having elasticity. For example, the elastic sphere 400 may be an elastic member such as rubber, foam material, expanded foam, urethane foam, sponge, or soft synthetic resin. The inner part of the elastic sphere 400 can contact the electrode assembly 110, and the outer part of the elastic sphere 400 can contact the inner surface of the battery case 120.

In this embodiment, a plurality of elastic spheres 400 are arranged along the circumferential direction of the electrode assembly 110 inside the battery case 120 surrounding the electrode assembly 110, so that when an external force is applied to the battery cell 100, as shown in FIG. 14, the elastic spheres 400 absorb and alleviate the external force, thereby enhancing impact resistance such as crush, and protecting the electrode assembly 110 from the external force. Additionally, the external force in the vertical direction can be alleviated by the elastic spheres 400 laminated on the outside of the electrode assembly 110.

As for other configurations and effects, they are the same as the previous embodiment, so detailed descriptions thereof are omitted here.

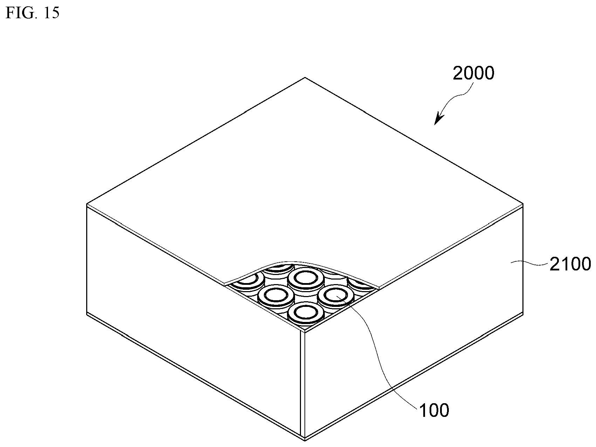

Meanwhile, a plurality of cylindrical battery cells 100 can be accommodated in a pack case 2100 to form a battery pack 2000 (see FIG. 15).

The battery pack 2000 may further include various control and protection systems such as a BMS (Battery Management System), and the battery pack 2000 can be applied to various devices. Specifically, it may be applied to means of transportation such as electric bicycles, electric vehicles, and hybrid vehicles, or to an energy storage system (ESS), but is not limited thereto and is applicable to various devices that can use secondary batteries.

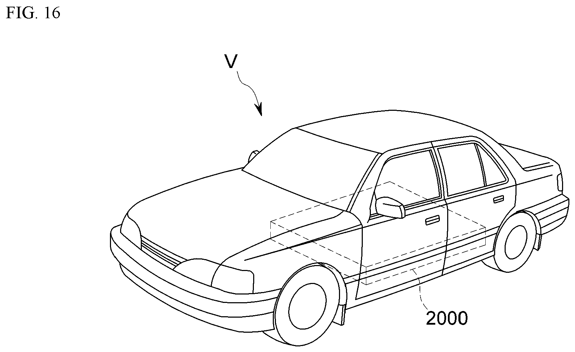

FIG. 16 is a view illustrating an electric vehicle (V) equipped with a battery pack 2000. In the electric vehicle (V), the wheels are driven by a motor powered by the battery pack 2000, whereby the electric vehicle can be operated.

While the present invention has been described with reference to preferred embodiments, it is not limited to the embodiments described above, and various changes and modifications may be made by those skilled in the art without departing from the spirit of the invention.

### [INDUSTRIAL APPLICABILITY]

The present invention can provide a battery cell and a battery pack having enhanced impact resistance against external impact (crush)

## Claims

1. A battery cell, comprising: an electrode assembly;
a battery case for accommodating the electrode assembly; and
a cap assembly disposed on an upper portion of the battery case and comprising a top cap;
wherein
the top cap comprises a return portion that is bent from an edge of the top cap and extends toward a center of the top cap.

2. The battery cell of claim 1, wherein
the return portion of the top cap is formed along a circumferential direction of the top cap.

3. The battery cell of claim 1, wherein
the return portion is formed integrally with the top cap.

4. The battery cell of claim 1, wherein
the cap assembly further comprises a cap plate disposed on a lower side of the top cap.

5. The battery cell of claim 4, wherein
an end of the cap plate surrounds the return portion from an outside.

6. The battery cell of claim 4, wherein
the cap assembly further comprises a gasket between the cap plate and the battery case.

7. The battery cell of claim 1, wherein
the battery case portion surrounding the electrode assembly has a double-wall structure composed of an outer wall and an inner wall disposed inside the outer wall.

8. The battery cell of claim 7, wherein
the inner wall is formed by connecting a plurality of arch pillars to each other.

9. The battery cell of claim 8, wherein
the plurality of arch pillars are arranged along a circumferential direction of the electrode assembly.

10. The battery cell of claim 9, wherein
the arch pillar comprises a concave portion that is concave toward an outside of the battery cell.

11. The battery cell of claim 7, wherein
further comprising a filler material filled between the inner wall and the outer wall.

12. The battery cell of claim 11, wherein
the filler material is a foam material.

13. The battery cell of claim 1, further comprising:
a plurality of elastic spheres surrounding the electrode assembly
from the inside of the battery case.

14. The battery cell of claim 13, wherein
the plurality of elastic spheres are stacked in a vertical direction.

15. The battery cell of claim 13, wherein
the elastic sphere is restorable by elasticity.

16. The battery cell of claim 13, wherein
the electrode assembly contacts an inside of the elastic sphere, and the battery case contacts an outside of the elastic sphere.

17. The battery cell of claim 13, wherein
the elastic sphere is made of rubber.

18. The battery cell of claim 13, wherein
the elastic sphere is made of a foam material.

19. The battery cell of claim 1, wherein
the battery cell is a cylindrical battery cell.

20. A battery pack, comprising a plurality of battery cells according to claim 1.
